# EUROPEAN PATENT SPECIFICATION

(11) **EP 4 082 780 B1**
(45) Date of publication and mention of the grant of the patent: **28.08.2024**
(21) Application number: 21884460.3
(22) Date of filing: 28.06.2021
(51) Int. Cl.: B32B 27/02, A47G 27/02, B32B 3/06, B32B 3/26, B32B 7/06

(54) **DETACHABLE CARPET**
ABNEHMBARER TEPPICH
TAPIS DÉTACHABLE

(30) Priority: 30.10.2020 CN 202022473853 U
(43) Date of publication of application: 02.11.2022
(73) Proprietor: Kunshan Yijia Ju Textile Co., Ltd., Kunshan, Jiangsu 215345 (CN)
(72) Inventor: CAO, Shunlin, Suzhou, Jiangsu 215345 (CN); ZHANG, Yi, Suzhou, Jiangsu 215345 (CN)
(74) Representative: Bayramoglu et al.
(86) International application number: PCT/CN2021/102626
(87) International publication number: WO 2022/088719

(56) References cited:
- CN-A- 110 393 413
- CN-A- 110 421 913
- CN-U- 210 679 971
- US-A1- 2016 368 239
- US-A1- 2017 282 498

## Description

### TECHNICAL FIELD

The utility model relates to the technical field of carpets and relates to a detachable carpet.

### BACKGROUND

There are two design methods for standard bath mats and carpets at present. One method is to design a towel-like bath mat, but this ground mat is not anti-skid and has potential safety hazards. Another method is to bond a material with an anti-skid function to a back surface of the carpet, and it is asserted that this ground mat is washable, but it will be separated or damaged or an upper fabric and a lower bottom back are separated once it is washed in a machine. Moreover, multi-applicability of the carpet is hindered due to tedious design and manufacture and high price of a conventional carpet. For example, a user is not allowed to replace the carpet seasonally at will as needed. Therefore, a carpet is needed, which not only has the functions of the conventional carpet, but also facilitates the user to separate the surface material of the carpet from a liner layer with anti-skid and water-repellent functions so as to disassemble and wash the surface material of the carpet.

In the prior art, there is a composite carpet connecting the carpet surface and the liner of the carpet by using a magic tape. The magic tape connects two layers of structures together with a secondary surface and a primary surface. One surface of the magic tape consists of fine and soft fiber loops (Loop) and the other surface is provided with hard hooks (Hook) with hooks. The two are firmly combined and can be separated only with a large force, owing to a large tensile force to separate the two. Thus, to connect the carpet surface and the liner of the carpet with the magic tape, as far as the soft carpet is concerned, the carpet may be damaged due to a large action force, and it is inconvenient to detach. The hard surface of the magic tape will reduce the using comfort level of the carpet. Moreover, the magic tape or a gravel cushion has a great destructive effect to soft loop-pile cloth, and the connecting force is greatly reduced after multiple times of use.

Through search, a patent literature CN210124536U discloses a conveniently cleaned detachable carpet, including a base layer of the carpet, a carpet surface and an activated carbon layer, where the bottom of the base layer of the carpet is provided with a glue layer, one side of a surface of the glue layer is fixedly connected with primary magic tape I, the other side of the surface of the glue layer is fixedly connected with a primary magic tape II, and the other sides of the primary magic tapes are fixedly connected with connecting bands. However, the manufacturing process of the carpet is tedious, and the hooks of the magic tapes will be fluffed after multiple times of use. In addition, plugs are easily damaged in detaching and cleaning processes and deform due to factors such as temperature, so that the service life of the carpet is affected severely.

A patent literature CN209932326U discloses an easily cleaned detachable carpet, including a base, where a groove for placing the carpet is dug in an upper surface of the base, cuboid limiting plates are welded and fixed to left and right sides of the groove, there are certain gaps between the limiting plates and the bottom of the groove, cuboid notches penetrating the limiting plates are dug in the limiting plates, cuboid pressure plate blocks are placed in the notches, one end of each of the pressure plate blocks is hinged and fixed with one end of each of the notches, the other end of the pressure plate block is provided with a bolt hole, a primary paste buckle is adhered and fixed to a bottom surface of the pressure plate block, a secondary paste buckle is adhered and fixed to the primary paste buckle, the secondary paste buckles are sewed on left and right sides of the upper surface of a bottom layer of the carpet, a cloth bag is sewed on the upper surface of the bottom layer, a zipper groove is dug in the side surface of the cloth bag, a zipper is mounted in the zipper groove, a bag core is placed in the cloth bag, an anti-skid layer is sewed above the cloth bag, and a suede layer of the carpet is sewed on the anti-skid layer. The prior art has the deficiency that by adopting a technical means of the paste buckle similarly, the paste buckle is easily damaged in the detaching and cleaning processes and deforms due to factors such as temperature, so that the service life of the carpet is affected severely. US 2016/368239 A1 discloses a combined anti-slip floor mat, including a mat body and a little mat, the mat body includes a leather, a PU self-skinning layer, and an anti-slip layer stacked together m that order. A recess is disposed in the middle of the top of the mat body, and the area of the recess is slightly less than the top area of the mat body; the little mat is matched to the recess in size. At least one opening is disposed on the middle of each side of the recess; wherein the opening passes through the floor mat; a cross notch is made on the bottom of the floor mat, by connecting each two opponent openings; the size of the little mat matches the recess on the mat body, and is separably embedded in the recess. US 2017/282498 A1 discloses a washable multicomponent floor mat. The floor mat contains a textile component and a base component. The textile component and the base component are attached to one another by at least one edge attachment means. CN 110 393 413 A and CN 210 679 971 U discloses detachable carpet including bonding layer with several polyester, polypropylene or nylon monofilament protrusions. The bonding layer is located between a three-dimensional mesh structure layer and an anti-slip and water-repellent layer. The several polyester, polypropylene or nylon monofilament protrusions of the bonding layer is upwardly positioned and can be inserted into the mesh gaps of three-dimensional mesh structure layer.

### SUMMARY

To overcome the defects in the prior art, the utility model is intended to provide a detachable carpet.

A detachable carpet provided by the utility model includes a carpet surface and an anti-skid water-repellent layer, where the carpet surface and the anti-skid water-repellent layer are detachably connected,
and where the carpet surface includes a surface layer, an adhesive glue layer, a bonding layer and a three-dimensional mesh fabric structure layer, the surface layer is arranged at the top end of the carpet surface and is connected with the bonding layer through the adhesive glue layer, one side of the three-dimensional mesh fabric structure layer towards the top end of the carpet surface is connected with the bonding layer and the other side of the three-dimensional mesh fabric structure layer facing away from the top end of the carpet surface is connected with the anti-skid water-repellent layer, such that the bonding layer is located between the adhesive glue layer and the three-dimensional mesh fabric structure layer; and
the bonding layer is provided with a plurality of downward protrusions capable of being inserted into mesh gaps of the three-dimensional mesh fabric structure layer.

Preferably, the surface layer includes a surface layer of a fleecy structure, a surface layer of a plain woven structure or a surface layer of a loop-pile structure.

Preferably, the side of the anti-skid water-repellent layer connected with the three-dimensional mesh fabric structure layer uses a fabric identical to the three-dimensional mesh fabric structure layer in material.

Preferably, the bonding layer uses a single-sided fabric comprising Longzhua cloth, warp knitted cloth, flocked cloth or tufted cloth, and the downward protrusions comprise polyester, polypropylene or nylon monofilaments.

Preferably, an included angle between each of the downward protrusions and the bonding layer is 30-90°.

Preferably, a thickness of the three-dimensional mesh fabric structure layer is 2-25 mm.

Preferably, an area of a single mesh on the warp knitted mesh fabrics in upper and lower layers of the three-dimensional mesh fabric structure layer is 0.2-100 mm².

Preferably, a height of each of the downward protrusions is 1-15 mm.

Preferably, the downward protrusions and the single-sided fabric are combined to form a single-sided structure layer, and an area of a single mesh on the warp knitted mesh fabric in the three-dimensional mesh fabric structure layer where the single-sided structure layer is located is 0.3-150 mm².

Preferably, a surface layer of the anti-skid water-repellent layer and a periphery of the carpet surface are provided with washable and movable double faced adhesive tape stickers capable of enhancing bonding between the periphery of the carpet surface and the anti-skid water-repellent layer.

Compared with the prior art, the utility model has the following beneficial effects:
1. By arranging the downward protrusions capable of being inserted into the three-dimensional mesh fabric structure layer in the bonding layer, polyester monofilaments on a single-sided structure layer are integrated with a warp knitted mesh fabric and are not easy to fall off, so that the service life is prolonged.
2. Thick and hard protrusions with certain deflection can be formed on the single-sided structure layer by using 20-120 D polyester monofilaments, can be conveniently and randomly inserted into meshes of the three-dimensional mesh fabric structure layer of the bottom layer of the carpet surface, can be detached conveniently, and can be detached repeatedly for many times without being damaged.
3. The three-dimensional mesh fabric structure layer provided by the utility model has a certain thickness. When the downward protrusions are inserted into the meshes, the protrusions can also be inserted into gaps connecting the polyester monofilaments in the middle of the three-dimensional mesh fabric structure layer, so that when the carpet surface and the anti-skid water-repellent layer are used in a compound manner, they are high in bonding strength and are unlikely to move in use, the periphery will not warp, and it is good in comfortability.
4. The anti-skid mat provided by the utility model uses the whole/half three-dimensional mesh fabric structure layer, endowing good elasticity to the carpet by inserting use of the two, thereby prolonging the service life of the carpet itself while providing comfortability and protection to the user.
5. The carpet provided by the utility model is coilable and foldable, and is convenient to transport.

### BRIEF DESCRIPTION OF DRAWINGS

By reading and referring to detailed description made by the following drawings to non-restrictive embodiments, other features, purposes and advantages of the utility model will become more obvious.
FIG. 1 is a schematic diagram of an overall structure using a surface layer of a fleecy structure of the utility model.
FIG. 2 is a schematic diagram of an overall structure using a surface layer of a plain woven structure of the utility model.
FIG. 3 is a schematic diagram of an overall structure using a surface layer of a loop-pile structure of the utility model.
FIG. 4 is a schematic diagram of a carpet surface structure using a surface layer of a fleecy structure of the utility model.
FIG. 5 is a schematic diagram of a carpet surface structure using a surface layer of a plain woven structure of the utility model.
FIG. 6 is a schematic diagram of a carpet surface structure using a surface layer of a loop-pile structure of the utility model.
FIG. 7 is a schematic structure diagram of an anti-skid water-repellent layer in the utility model.

### In the drawings:

| | | | |
|---|---|---|---|
| surface layer of fleecy structure 1; adhesive glue layer 2; | bonding layer 3; three-dimensional mesh fabric structure layer 4; | anti-skid water-repellent layer 5; surface layer of plain woven structure 6; | surface layer of loop-pile structure 7. |

### DETAILED DESCRIPTION OF EMBODIMENTS

Detailed description is further made to the utility model in combination with specific embodiments below. The embodiments below contribute to further understanding the utility model by those skilled in the art but do not limit the utility model in any form. It is to be noted that variations and improvements still can be made by those skilled in the technical field without departing the concept of the utility model. These fall into the protection scope of the utility model.

### Embodiment 1

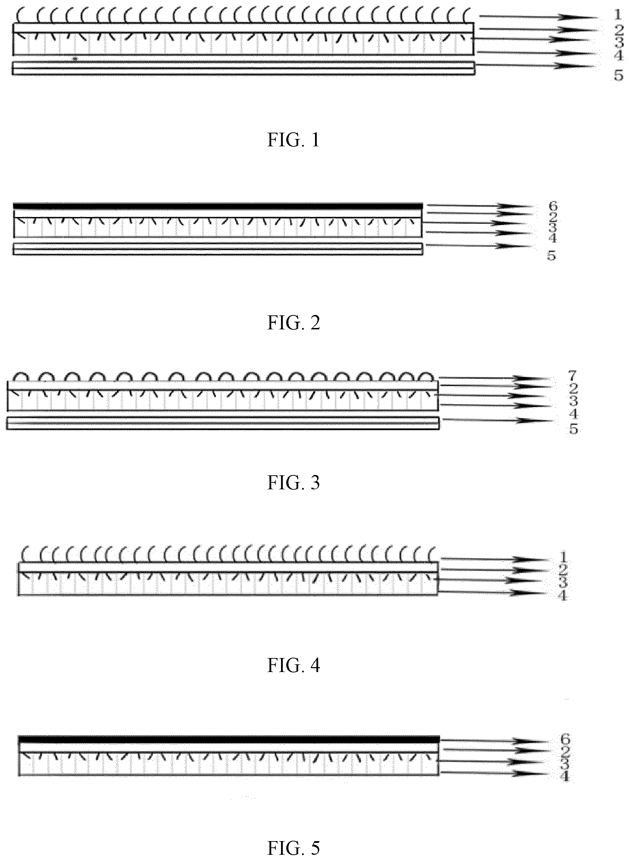

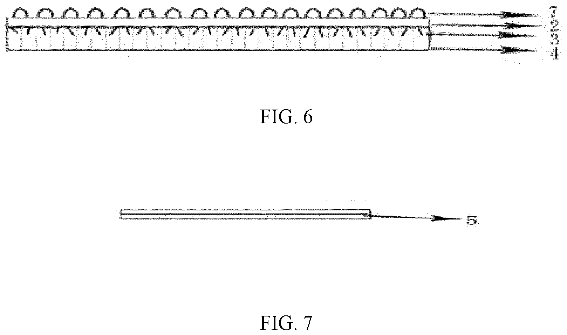

As shown in FIG. 1, FIG. 4 and FIG. 7, a detachable carpet provided by the utility model includes a carpet surface and an anti-skid water-repellent layer 5, where the carpet surface and the anti-skid water-repellent layer 5 are detachably connected,
and where the carpet surface includes a surface layer 1 of a fleecy structure, an adhesive glue layer 2, a bonding layer 3 and a three-dimensional mesh fabric structure layer 4, the surface layer 1 of a fleecy structure is arranged at the top end of the carpet surface and is connected with the bonding layer 3 through the adhesive glue layer 2, one side of the three-dimensional mesh fabric structure layer 4 is connected with the bonding layer 3 and the other side thereof is connected with the anti-skid water-repellent layer; and the bonding layer 3 is provided with a plurality of downward protrusions capable of being inserted into mesh gaps of the three-dimensional mesh fabric structure layer 4.

Further, the bonding layer 3 uses a single-sided fabric including Longzhua cloth, and the downward protrusions are polyester. The side of the anti-skid water-repellent layer 5 connected with the three-dimensional mesh fabric structure layer 4 uses a fabric identical to the three-dimensional mesh fabric structure layer in material.

Further, an included angle between the bonding layer 3 and each of the downward protrusions is 30-70°, the downward protrusions and the single-sided fabric are combined to form a single-sided structure layer, and a height of the downward protrusion is 1-15 mm. A thickness of the three-dimensional mesh fabric structure layer 4 is 2-25 mm, an area of a single mesh on the warp knitted mesh fabrics in upper and lower layers of the three-dimensional mesh fabric structure layer 4 is 0.2-100 mm², and an area of a single mesh on the warp knitted mesh fabric in the three-dimensional mesh fabric structure layer 4 where the single-sided structure layer is located is 0.3-150 mm². The three-dimensional mesh fabric structure layer 4 is integrally woven by 15-200 D polyester, polypropylene fiber or nylon monofilaments, more specifically 15-200 D polyester monofilament yarns. When the polyester filaments are smaller than 15 D, the polyester monofilaments formed in the bottom layer of the carpet surface are too soft, so that they cannot be inserted into the mesh gaps of the three-dimensional mesh fabric structure layer or only a small amount of polyester monofilaments can be inserted, and thus, effects such as high bonding strength of the utility model cannot be achieved.

Further, a surface layer of the anti-skid water-repellent layer and a periphery of the carpet surface are provided with washable and movable double faced adhesive tape stickers capable of enhancing bonding between the periphery of the carpet surface and the anti-skid water-repellent layer.

Further description will be made in combination with preferred embodiments.

Based on the abovementioned basic embodiments, the three-dimensional mesh fabric structure layer 4 is a warp knitted mesh fabric, the thickness of the three-dimensional mesh fabric structure layer 4 is 5 mm, an area of a single mesh on the warp knitted mesh fabrics in upper and lower layers of the three-dimensional mesh fabric structure layer 4 is 20 mm², and an area of a single mesh on the warp knitted mesh fabric in the three-dimensional mesh fabric structure layer 4 where the single-sided structure layer is located is 0.3-150 mm².

The three-dimensional mesh fabric structure layer 4 is integrally woven 20 D polyester, polypropylene fiber or nylon monofilaments, more specifically 20 D polyester monofilament yarns.

The bonding layer 3 is a single-sided tufted fabric woven by 60 D polyester, polypropylene fiber or nylon monofilaments or a single-sided flocked fabric woven by 60 D polyester, polypropylene fiber or nylon monofilaments.

Further description will be made in combination with varied embodiments.

Based on the abovementioned basic embodiments, the bonding layer 3 can further use a single-sided fabric of warp knitted cloth, flocked cloth or tufted cloth, and the downward protrusions can further be polypropylene fiber or nylon monofilament materials.

Based on the abovementioned preferred embodiments, the three-dimensional mesh fabric structure layer 4 can further be a knitted fabric, a woven fabric, a non-woven fabric, a tufted fabric or a compound fabric.

Based on the abovementioned basic embodiments, the anti-skid water-repellent layer 5 can be a foamed latex layer, a thermoplastic elastomer material layer, an acrylic fiber resin layer, an EVA foamed layer, a polyurethane foamed layer, an XPE foamed layer or an IXPE foamed layer and a PVC plastic sheeting.

### Embodiment 2

As shown in FIG. 2, FIG. 5 and FIG. 7, a detachable carpet provided by the utility model includes a carpet surface and an anti-skid water-repellent layer 5, where the carpet surface and the anti-skid water-repellent layer 5 are detachably connected,
and where the carpet surface includes a surface layer 6 of a plain woven structure, an adhesive glue layer 2, a bonding layer 3 and a three-dimensional mesh fabric structure layer 4, the surface layer 6 of a plain woven structure is arranged at the top end of the carpet surface and is connected with the bonding layer 3 through the adhesive glue layer 2, one side of the three-dimensional mesh fabric structure layer 4 is connected with the bonding layer 3 and the other side thereof is connected with the anti-skid water-repellent layer 5; and the bonding layer 3 is provided with a plurality of downward protrusions capable of being inserted into mesh gaps of the three-dimensional mesh fabric structure layer 4.

Further, the bonding layer 3 uses a single-sided fabric including Longzhua cloth, and the downward protrusions are polyester. The side of the anti-skid water-repellent layer 5 connected with the three-dimensional mesh fabric structure layer 4 uses a fabric identical to the three-dimensional mesh fabric structure layer in material. The warp knitted three-dimensional mesh fabric or the knitted fabric, the woven fabric, the non-woven fabric and the compound fabric consists of the warp knitted mesh fabrics in upper and lower layers and a plurality of middle polyester monofilaments vertically arranged to connect the warp knitted mesh fabrics in upper and lower layers, and is specifically woven by 30 D polyester monofilament yarns integrally. An included angle between each of the polyester monofilaments and each of warp knitted mesh fabrics in the upper or lower layer is 50-80°.A thickness of the three-dimensional mesh fabric structure layer is 3 mm, and an area of a single mesh on the warp knitted mesh fabric in the upper or lower layer is 0.5 square millimeter.

The three-dimensional mesh fabric structure layer 4 is specifically woven by 20 D polyester monofilament BCF yarns integrally, an included angle between each of polyester monofilament protrusions and each of the warp knitted mesh fabrics is 50-70°, and a height of the polyester monofilament protrusion is 1.5 mm. An area of the single mesh on the warp knitted mesh fabric of the bonding layer 3 is 0.2 mm², and textile fibers are on the surfaces of the knitted fabric, the woven fabric, the non-woven fabric, the tufted fabric and the compound fabric.

### Embodiment 3

As shown in FIG. 3, FIG. 6 and FIG. 7, a detachable carpet provided by the utility model includes a carpet surface and an anti-skid water-repellent layer 5, where the carpet surface and the anti-skid water-repellent layer 5 are detachably connected,
and where the carpet surface includes a surface layer 7 of a loop-pile structure, an adhesive glue layer 2, a bonding layer 3 and a three-dimensional mesh fabric structure layer 4, the surface layer 7 of a loop-pile structure is arranged at the top end of the carpet surface and is connected with the bonding layer 3 through the adhesive glue layer 2, one side of the three-dimensional mesh fabric structure layer 4 is connected with the bonding layer 3 and the other side thereof is connected with an anti-skid mat; and the bonding layer 3 is provided with a plurality of downward protrusions capable of being inserted into mesh gaps of the three-dimensional mesh fabric structure layer 4.

Further, the bonding layer 3 uses a single-sided fabric including Longzhua cloth, and the downward protrusions are polyester. The side of the anti-skid water-repellent layer 5 connected with the three-dimensional mesh fabric structure layer 4 uses a fabric identical to the three-dimensional mesh fabric structure layer in material, and the downward protrusions and the single-sided fabric are combined to form a single-sided structure layer.

For further description, the three-dimensional mesh fabric structure layer 4 consists of the warp knitted mesh fabrics in upper and lower layers and a plurality of middle polyester monofilaments vertically arranged to connect the warp knitted mesh fabrics in upper and lower layers, and is specifically woven by 200 D polyester monofilament yarns integrally. An included angle between each of the polyester monofilaments and each of warp knitted mesh fabrics in the upper or lower layer is 60-90°.A thickness of the three-dimensional mesh fabric structure layer is 15mm, and an area of a single mesh on the warp knitted mesh fabric in the upper or lower layer is 70mm². Textile fibers are on the surfaces of the knitted fabric, the woven fabric, the non-woven fabric, the tufted fabric and the compound fabric. The three-dimensional mesh fabric structure layer 4 is specifically woven by 120 D polyester monofilament BCF yarns integrally. An included angle between each of polyester protrusions and each of the warp knitted mesh fabrics is 30-70°, and a height of the polyester monofilament protrusion is 13mm.An area of a single mesh on the warp knitted mesh fabric of the bonding layer is 200 mm².An included angle between the knitted fabric, the woven fabric, the non-woven fabric, the tufted fabric and the compound fabric and the polyester monofilament is 30-70°.

Further description will be made based on a varied embodiment of embodiment 3.

An included angle between each of polyester protrusions and each of the warp knitted mesh fabrics is 60-90°.A thickness of the three-dimensional mesh fabric structure layer 4 is 9mm, and an area of a single mesh on the warp knitted mesh fabric in the upper or lower layer is 40 mm².A thickness of the surfaces of the knitted fabric, the woven fabric, the non-woven fabric, the tufted fabric and the compound fabric is 11 mm.

The side of the anti-skid water-repellent layer 5 connected with the three-dimensional mesh fabric structure layer 4 is integrally woven and tufted by 100 D polyester monofilament yarns. An included angle between each of polyester monofialment protrusions and the single-sided tufted fabric is 40-60 °, and a height of the downward protrusion is 10mm.

The utility model is intended to overcome defects that when an existing detachable and washable carpet is used, it is easy to damage the carpet surface during detachment due to a great bonding force, the using effect is affected due to a small bonding force, the carpet is inconvenient to detach, the service life is poor and the like.

## Claims

1. A detachable carpet, comprising a carpet surface and an anti-skid water-repellent layer (5), wherein the carpet surface and the anti-skid water-repellent layer (5) are detachably connected,
and wherein the carpet surface comprises a surface layer, an adhesive glue layer (2), a bonding layer (3) and a three-dimensional mesh fabric structure layer (4), the surface layer is arranged at the top end of the carpet surface; and
**characterized in that** the surface layer is connected with the bonding layer (3) through the adhesive glue layer (2), one side of the three-dimensional mesh fabric structure layer (4) towards the top end of the carpet surface is connected with the bonding layer (3) and the other side of the three-dimensional mesh fabric structure layer (4) facing away from the top end of the carpet surface is connected with the anti-skid water-repellent layer(5), such that the bonding layer (3) is located between the adhesive glue layer (2) and the three-dimensional mesh fabric structure layer (4); and
the bonding layer (3) is provided with a plurality of downward protrusions capable of being inserted into mesh gaps of the three-dimensional mesh fabric structure layer (4).

2. The detachable carpet according to claim 1, wherein the surface layer comprises a surface layer (1) of a fleecy structure, a surface layer (6) of a plain woven structure or a surface layer (7) of a loop-pile structure.

3. The detachable carpet according to claim 1, wherein the side of the anti-skid water-repellent layer (5) connected with the three-dimensional mesh fabric structure layer (4) uses a fabric identical to the three-dimensional mesh fabric structure layer (4) in material.

4. The detachable carpet according to claim 1, wherein the bonding layer (3) uses a single-sided fabric comprising Longzhua cloth, warp knitted cloth, flocked cloth or tufted cloth, and the downward protrusions comprise polyester, polypropylene fiber or nylon monofilaments.

5. The detachable carpet according to claim 4, wherein an included angle between each of the downward protrusions and the bonding layer (3) is 30-90°.

6. The detachable carpet according to claim 1, wherein a thickness of the three-dimensional mesh fabric structure layer (4) is 2-25 mm.

7. The detachable carpet according to claim 1, wherein an area of a single mesh on the warp knitted mesh fabrics in upper and lower layers of the three-dimensional mesh fabric structure layer (4) is 0.2-100 mm².

8. The detachable carpet according to claim 1, wherein a height of the downward protrusion is 1-15 mm.

9. The detachable carpet according to claim 4, wherein the downward protrusions and the single-sided fabric are combined to form a single-sided structure layer, and an area of a single mesh on the warp knitted mesh fabric in the three-dimensional mesh fabric structure layer (4) where the single-sided structure layer is located is 0.3-150 mm².

10. The detachable carpet according to claim 1, wherein a surface layer of the anti-skid water-repellent layer (5) and a periphery of the carpet surface are provided with washable and movable double faced adhesive tape stickers capable of enhancing bonding between the periphery of the carpet surface and the anti-skid water-repellent layer (5).

## Patentansprüche

1. Abnehmbarer Teppich, der eine Teppichoberfläche und eine rutschfeste wasserabweisende Schicht (5) umfasst, wobei die Teppichoberfläche und die rutschfeste wasserabweisende Schicht (5) abnehmbar verbunden sind,
und wobei die Teppichoberfläche eine Oberflächenschicht, eine klebende Leimschicht (2), eine Klebeschicht (3) und eine dreidimensionale Maschengewebestrukturschicht (4) umfasst, die Oberflächenschicht an dem oberen Ende der Teppichoberfläche eingerichtet ist; und
**dadurch gekennzeichnet, dass** die Oberflächenschicht mit der Klebeschicht (3) durch die klebende Leimschicht (2) verbunden ist, eine Seite der dreidimensionalen Maschengewebestrukturschicht (4) in Richtung des oberen Endes der Teppichoberfläche mit der Klebeschicht (3) verbunden ist, und die andere Seite der dreidimensionalen Maschengewebestrukturschicht (4), die von dem oberen Ende der Teppichoberfläche abgewandt ist, mit der rutschfesten wasserabweisenden Schicht (5) derart verbunden ist, dass sich die Verbindungsschicht (3) zwischen der klebenden Leimschicht (2) und der dreidimensionalen Maschengewebestrukturschicht (4) befindet, und
die Verbindungsschicht (3) mit einer Vielzahl von nach unten ragenden Vorsprüngen versehen ist, die in der Lage sind, in die Maschenlücken der dreidimensionalen Maschengewebestrukturschicht (4) eingefügt zu werden.

2. Abnehmbarer Teppich nach Anspruch 1, wobei die Oberflächenschicht eine Oberflächenschicht (1) aus einer flauschigen Struktur, eine Oberflächenschicht (6) aus einer glatt gewebten Struktur oder eine Oberflächenschicht (7) aus einer Schlingenflorstruktur umfasst.

3. Abnehmbarer Teppich nach Anspruch 1, wobei die Seite der rutschfesten wasserabweisenden Schicht (5), die mit der dreidimensionalen Maschengewebestrukturschicht (4) verbunden ist, einen Stoff verwendet, der mit der dreidimensionalen Maschengewebestrukturschicht (4) im Material identisch ist.

4. Abnehmbarer Teppich nach Anspruch 1, wobei die Verbindungsschicht (3) ein einseitiges Gewebe verwendet, das Longzhua-Tuch, ein Kettengewirktuch, ein beflocktes Tuch oder ein getuftetes Tuch umfasst, und die nach unten ragenden Vorsprünge Polyester-, Polypropylenfasern oder Nylon-Monofilamente umfassen.

5. Abnehmbarer Teppich nach Anspruch 4, wobei ein Öffnungswinkel zwischen jedem der nach unten ragenden Vorsprünge und der Verbindungsschicht (3) 30-90° beträgt.

6. Abnehmbarer Teppich nach Anspruch 1, wobei eine Dicke der dreidimensionalen Maschengewebestrukturschicht (4) 2-25 mm beträgt.

7. Abnehmbarer Teppich nach Anspruch 1, wobei eine Fläche einer einzelnen Masche auf den Kettengewirk-Maschengeweben in oberen und unteren Schichten der dreidimensionalen Maschengewebestrukturschicht (4) 0,2-100 mm² beträgt.

8. Abnehmbarer Teppich nach Anspruch 1, wobei eine Höhe des nach unten ragenden Vorsprungs 1-15 mm beträgt.

9. Abnehmbarer Teppich nach Anspruch 4, wobei die nach unten ragenden Vorsprünge und das einseitige Gewebe kombiniert sind, um eine einseitige Strukturschicht zu bilden, und eine Fläche einer einzelnen Masche auf dem Kettengewirk-Maschengewebe in der dreidimensionalen Maschengewebestrukturschicht (4), in der sich die einseitige Strukturschicht befindet, 0,3-150 mm² beträgt.

10. Abnehmbarer Teppich nach Anspruch 1, wobei eine Oberflächenschicht der rutschfesten wasserabweisenden Schicht (5) und eine Peripherie der Teppichoberfläche mit waschbaren und bewegbaren doppelseitigen Klebebandaufklebern versehen sind, die in der Lage sind, das Verbinden zwischen der Peripherie der Teppichoberfläche und der rutschfesten wasserabweisenden Schicht (5) zu verbessern.

## Revendications

1. Tapis détachable, comprenant une surface de tapis et une couche hydrofuge antidérapante (5), dans lequel la surface de tapis et la couche hydrofuge antidérapante (5) sont reliées de manière détachable,
et dans lequel la surface de tapis comprend une couche de surface, une couche de colle adhésive (2), une couche de liaison (3) et une couche de structure de tissu maillé tridimensionnel (4), la couche de surface est disposée au-dessus de la surface de tapis ; et
**caractérisé en ce que** la couche de surface est reliée à la couche de liaison (3) à travers la couche de colle adhésive (2), un côté de la couche de structure de tissu maillé tridimensionnel (4) vers l'extrémité supérieure de la surface de tapis est reliée à la couche de liaison (3) et l'autre côté de la couche de structure de tissu maillé tridimensionnel (4) orientée à l'opposé de l'extrémité supérieure de la couche de tapis est reliée à la couche hydrofuge antidérapante (5), de telle sorte que la couche de liaison (3) est située entre la couche de colle adhésive (2) et la couche de structure de tissu maillé tridimensionnel (4) ; et
la couche de liaison (3) est pourvue d'une pluralité de saillies vers le bas adaptées pour être insérées dans des jeux de maille de la couche de structure de tissu maillé tridimensionnel(4).

2. Tapis détachable selon la revendication 1, dans lequel la couche de surface comprend une couche de surface (1) de structure laineuse, une couche de surface (6) de structure tissée lisse ou une couche de surface (7) de structure à poils bouclés.

3. Tapis détachable selon la revendication 1, dans lequel le côté de la couche hydrofuge antidérapante (5) relié à la couche de structure de tissu maillé tridimensionnel (4) utilise un tissu de matériau identique à la couche de structure de tissu maillé tridimensionnel (4).

4. Tapis détachable selon la revendication 1, dans lequel la couche de liaison (3) utilise un tissu monoface comprenant un tissu de Longzhua, un tissu tricoté en chaîne, un tissu floqué ou un tissu touffeté, et les saillies vers le bas comprennent des monofilaments de polyester, de fibre de polypropylène ou de nylon.

5. Tapis détachable selon la revendication 4, dans lequel un angle inclus entre chacune des saillies vers le bas et la couche de liaison (3) est de 30-90°.

6. Tapis détachable selon la revendication 1, dans lequel une épaisseur de la couche de structure de tissu maillé tridimensionnel (4) est de 2-25 mm.

7. Tapis détachable selon la revendication 1, dans lequel une zone d'une seule maille sur les tissus maillés tricotés en chaîne dans des couches supérieure et inférieure de la couche de structure de tissu maillé tridimensionnel (4) est de 0,2-100 mm².

8. Tapis détachable selon la revendication 1, dans lequel une hauteur de la saillie vers le bas est de 1-15 mm.

9. Tapis détachable selon la revendication 4, dans lequel les saillies vers le bas et le tissu monoface sont combinés pour former une couche de structure monoface, et une zone d'une seule maille sur le tissu maillé tricoté en chaîne dans la couche de structure de tissu maillé tridimensionnel (4) où la couche de structure monoface est située est de 0,3-150 mm².

10. Tapis détachable selon la revendication 1, dans lequel une couche de surface de la couche hydrofuge antidérapante (5) et une périphérie de la surface de tapis sont pourvues d'autocollants adhésifs en ruban double-face lavables et mobiles capables d'améliorer la liaison entre la périphérie de la surface de tapis et la couche hydrofuge antidérapante (5).
